# EUROPEAN PATENT APPLICATION

(11) **EP 2 048 888 A1**
(43) Date of publication of application: **15.04.2009**
(21) Application number: 07301460.7
(22) Date of filing: 12.10.2007
(51) Int. Cl.: H04N 7/26, H04N 7/50

(54) **Method and decoder for decoding an image frame of an image frame sequence**

(71) Applicant: Thomson Licensing, 92100 Boulogne-Billancourt (FR)
(72) Inventor: Zhang, Hui, 100085 Beijing (CN); Zhu, Li Hua, 100085 Beijing (CN); Yang, Jiheng, 100085 Beijing (CN)
(74) Representative: Rittner, Karsten

(57) **Abstract**

The invention is related to a method for decoding an image frame of an image frame sequence and to a corresponding decoder.

The method comprises the steps of reconstructing a representation of the image frame, classifying at least one block boundary as to be either high-freq or low-freq and filtering pixels of the at least one block boundary in dependency on the classification and outputting the filtered representation.

Film grain noise and/or random texture are more likely to produce high-freq boundaries. Therefore, filtering boundary pixels in dependency on frequency classification helps preserving film grain noise and random texture which are of relevance for video quality at high bit rates.

## Description

### Background

The invention is related to a method for decoding an image frame of an image frame sequence and to a corresponding decoder.

H.264/AVC is a video coding standard of the Joint Video Team (JVT). It can be widely used in video communication servers in IP network and wireless environment. H.264/AVC has proposed a deblocking filter placed in a prediction loop (thus also named in-loop filter) of a decoder as an important tool to increase coding efficiency and improve quality of outputted video.

The deblocking filter is designed to reduce the well-known "blocking" artifacts, which are discontinuities found between boundaries of adjacent blocks in a reconstructed frame. The deblocking filter is an adaptive filter, whereby the strength of filtering is controlled by the values of syntax elements and picture content. The deblocking filter is designed such that differences between samples near a block edge are measured. If the measured difference is smaller than a lower threshold the transition is smooth enough and therefore remains unchanged. And, if the measured difference is lager than an upper threshold the transition is thought to represent a real edge present in the source picture. Therefore, such transitions remain unchanged, also. But, if the difference is larger than the lower threshold but smaller than the upper threshold it is likely representing a blocking artefact. Therefore, the deblocking filter reduces differences which fall between the thresholds. The lower threshold and the upper threshold are determined by help of the coarseness of quantization used for encoding.

The deblocking filter helps to reduce blockiness while preserving sharpness of the content. The benefit of the in-loop filter is two-folded. First, blocking artefacts are reduced which become apparent especially when encoding is done with high compression rates. This improves objective and subjective video quality. Furthermore, a filtered reconstruction of a preceding picture serves as better reference for reconstruction of a subsequent picture by help of motion data. Compared with a non-filtered video of similar objective quality the filtered video requires up to 10% less bit rate.

Though providing improvements to video quality at low bit rates, the deblocking filter comes along with disadvantages at high bit rates. That is, film grain noise and/or random textures are smoothed by the deblocking filter. But, a loss of random texture degrades video quality. And, as film grain noise serves for giving movies a certain appearance specific for a movie director loss of film grain noise is a loss of the director's "signature".

Thus, there is a need for better preservation of film grain noise, textures and the like, while removing blocking artefacts and achieving high compression rates.

### Invention

This is achieved by a method for decoding an image frame of an image frame sequence said method comprising the feature of claim 1.

Said method comprises the steps of reconstructing a representation of the image frame, classifying at least one block boundary as to be either high-freq or low-freq and filtering pixels of the at least one block boundary in dependency on the classification and outputting the filtered representation.

Film grain noise and/or random texture are more likely to produce high-freq boundaries. Therefore, filtering boundary pixels in dependency on frequency classification helps preserving film grain noise and random texture.

In a further embodiment of the method, filtering is dependent on the number and strength of high -frequency DCT-coefficients in the block to which the at least one block boundary belongs and in the block adjacent to said at least one block boundary.

In yet a further embodiment of the method filtering is further dependent on size of the two blocks, quantization parameters used for encoding of the two blocks, motion data assigned to the two blocks and/or the difference in luminance and/or colour of pixels of said at least one block boundary and of pixels of an adjacent block boundary of said adjacent block.

This helps telling apart blocking artefacts from edges present in the source picture and therefore helps removing blocking artefacts, only.

In even a further embodiment, the method further comprises filtering the representation with an H.264/AVC deblocking filter and reconstructing a further representation of a further image frame by help of the H.264/AVC deblocked representation and of motion data.

Then, the decoding method is in conformity with the H.264/AVC standard.

Alternatively to the even a further embodiment, the method may further comprise reconstructing a further representation of a further image frame by help of the filtered representation and of motion data.

This reduces hardware requirements.

Better preservation of film grain noise, textures and the like, is also achievable by help of a decoder for decoding an image frame of an image frame sequence said decoder comprising the features of claim 7.

Additional embodiments of said decoder further comprise the features of one or more claims depending on claim 7.

### Drawings

Exemplary embodiments of the invention are illustrated in the drawings and are explained in more detail in the following description.

### In the figures:

- Fig. 1: shows an exemplary decoder as known in the art,
- Fig. 2: shows a first exemplary embodiment of the inventive decoder,
- Fig. 3: shows a second exemplary embodiment of the inventive decoder,
- Fig. 4: shows a third exemplary embodiment of the inventive decoder and
- Fig. 5: shows a flow chart of an exemplary embodiment of the inventive post-processing filtering.

### Exemplary embodiments

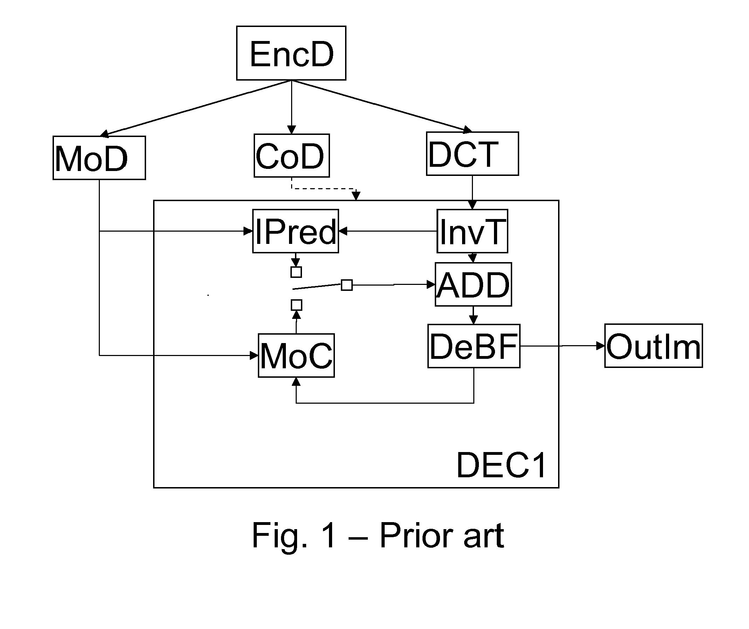

An exemplary decoder DEC1 as known in the art is depicted in fig. 1. The decoder DEC1 receives encoding data EncD which comprises coefficients DCT resulting from quantization of coefficients which are derived by applying a discrete cosine transformation on a residual image. The residual image is gained from an original image by subtracting a predicted image. The predicted image itself is achieved by determining blocks in one or more reference images wherein the determined blocks are similar to blocks in the original image. The predicted image is formed from the determined blocks and blocks of the original image for which no similar block in the reference image was found. The difference in location of the determined blocks in the reference image and in the predicted image are stored in motion data MoD which are also comprised in the encoding data EncD. The encoding data may further comprise control data CoD for controlling the decoding process.

The decoder dequantizes in module InvT the coefficients DCT and applies an inverse discrete cosine transform to the dequantized coefficients resulting in a first preliminary image. The first preliminary image is added in an adder ADD to a progressed image resulting in a second preliminary image. The progressed image is either resulting from intra-prediction by help of motion data MoD in module IPred if the image currently decoded is an intra-encoded I-picture. If no prediction was applied during encoding module IPred outputs an empty image. Or, if the image currently decoded was encoded by help of a preceding image said progressed image is formed from the reconstructed image of a preceding image by help of motion data MoD. This is done in means dedicated for motion compensation MoC.

The secondary preliminary image is then filtered with an in-loop H.264/AVC deblocking filter DeBF. This results in a reconstructed image. The reconstructed image is used for forming the progressed image for decoding a succeeding image by utilizing motion data MoD associated with the succeeding image. And, the reconstructed image is further outputted as an output image OutIm.

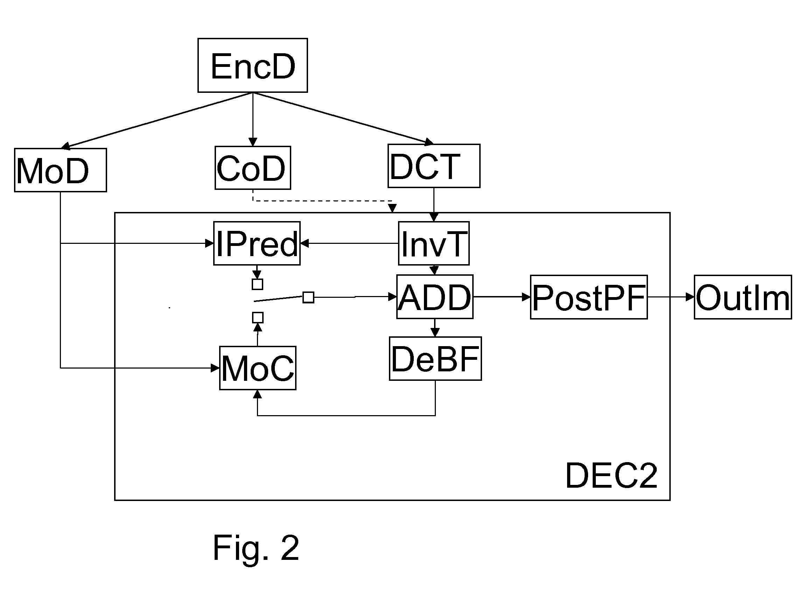

Fig. 2 depicts an exemplary embodiment of the inventive decoding principle. The architecture is similar to that of fig. 1. That is, encoding data EncD comprising motion data MoD and DCT-coefficients DCT are fed into the decoder DEC2. Within the decoder the image is reconstructed as described above by help of fig. 1. But, instead of outputting the reconstructed image which results from in-loop deblocking filtering DeBF the second preliminary image is post-processed by a post-processing filter PostPF. Then, the post-processing filtered second preliminary image is outputted as output image OutIm.

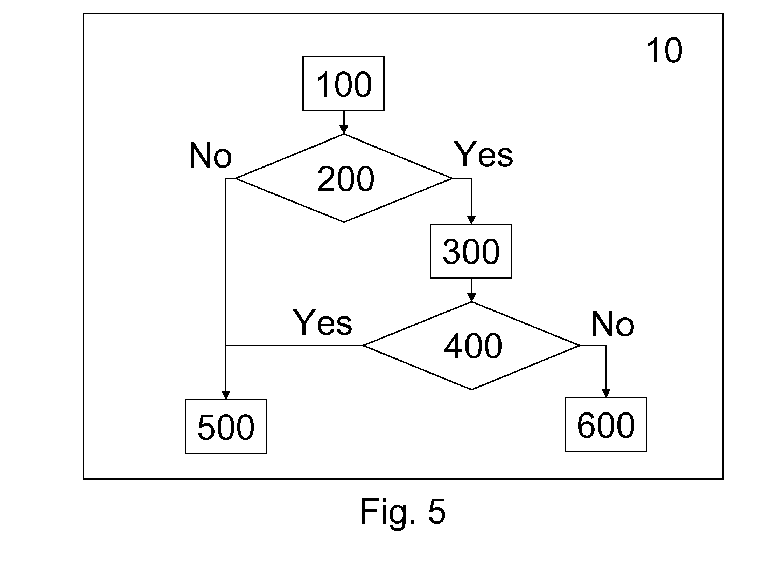

A flow chart of an exemplary embodiment of post-processing filtering process 10 is depicted in fig. 5. In a first step 100, a block boundary is classified as comprising either a high-frequency transition or a low-frequency transition. Then, the block boundary classification result is checked in decision step 200 for being a low-frequency transition. If so, the smoothness of transition is determined in step 300. Then in step 400, it is determined whether the smoothness reaches or exceeds a smoothness threshold. If not, in step 600 pixels of the respective boundary are filtered by help of a weighted sum of pixels from a surrounding of the pixel to-be-filtered. Otherwise, the boundary pixels are excluded from filtering, i.e. the boundary pixels remain unchanged. The same is true if in step 200 it was found that the transition is high-frequency.

So, the post-processing filter PostPF leaves boundary pixels at high-frequency boundary transitions and at smooth low-frequency boundary transitions unchanged, and filters pixels at non-smooth low-frequency boundary transitions, only.

The block boundary classification in step 100 is based on the number and strength of the high-frequency DCT-coefficients DCT of the luminance component in a pair of blocks being adjacent to each other. For each block of said pair, if the number of high-frequency DCT-coefficients DCT is less than a threshold value Thr_num, and the sum of their strength is less than a threshold value Thr_strength, the respective block is classified as being a low-freq block. Otherwise, it is classified as being a high-freq block. Thresholds used for intra-coded and inter-coded blocks may be different.

In an alternative exemplary embodiment block classification for inter-coded blocks comprises re-encoding by quantizing and discrete cosine transforming the reconstructed inter-coded block as an intra block. Then the classification method for intra-blocks may be employed to said re-encoded block.

Block boundary classification is done for both blocks of said pair of blocks. If in step 100 at least one of the blocks of said pair is classified as being a high-freq block, their boundaries which are adjacent to each other are classified as being of a high-frequency transition type. Only, if both blocks of said pair of blocks are classified as low-freq blocks their adjacent boundaries are classified as being of a low-frequency transition type in step 100.

The smoothness of transition determined in step 300 evaluates one or more quantities for determination of smoothness. Said quantities may comprise differences of quantization parameters for the pair of blocks; a difference of the motion vectors for the two blocks and/or the luminance/colour differences of the boundary pixels of the two blocks. One, some or all of the mentioned differences may be represented by a Boolean flag indicating whether the respective difference exceeds a corresponding threshold. A weighted combination of the quantities, differences, Boolean flags or a mixture thereof, forms the smoothness.

If the encoding scheme allows for variable block size, the size of the two blocks may be taken into account for the determination of smoothness and/or for the classification of the transition.

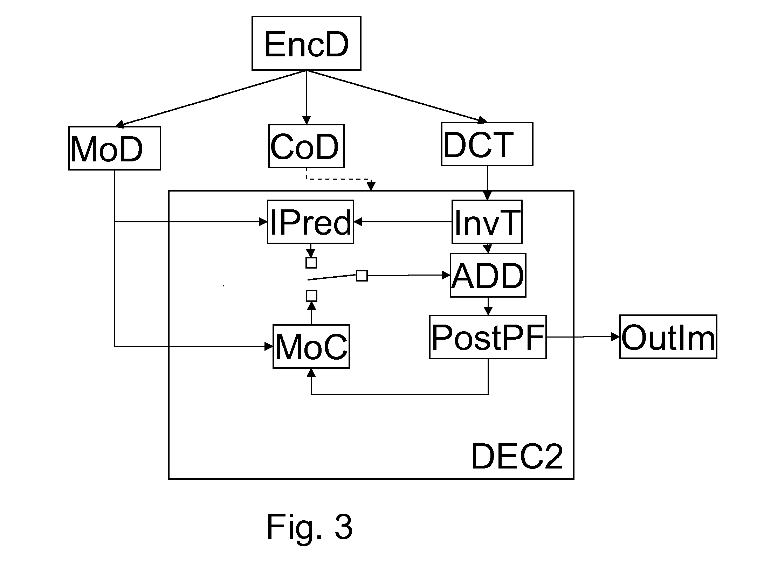

A yet further exemplary embodiment depicted in fig. 3 differs from the decoder depicted in fig. 1 in that the in-loop deblocking filter DeBF is replaced by the post processing filter PostPF. Then, in-loop filtering for image progression comprises the steps depicted in fig. 5. For avoiding introduction of new artefacts a corresponding filter might be used during encoding.

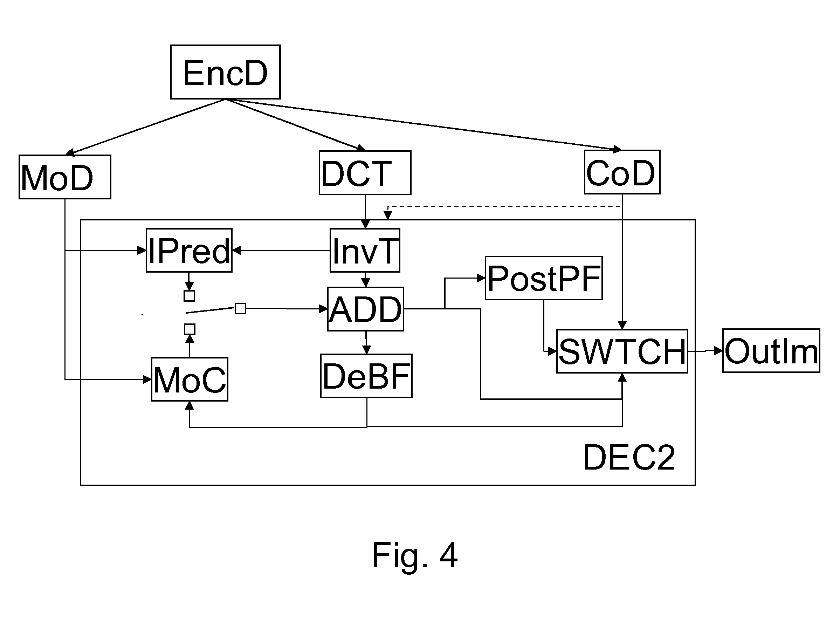

Fig. 4 depicts a yet further exemplary embodiment of the inventive decoding principle. The architecture is similar to that of fig. 2 but further comprises a switch SWTCH connected to the post-processing filtering means PostPF, the adder ADD and the deblocking filter DeBF. The SWTCH is controlled by the control data CoD comprised in the encoding data EncD. The switch SWTCH allows for outputting the unprocessed second preliminary image, the post-processed second preliminary image and/or the reconstructed image.

## Claims

1. Method for decoding an image frame of an image frame sequence comprising
- reconstructing a representation of the image frame,
- classifying at least one block boundary as to be either high-freq or low-freq,
- filtering (10) pixels of the at least one block boundary in dependency on the classification and
- outputting the filtered representation (OutIm).

2. Method according to claim 1, wherein filtering (10) is dependent on the number and strength of high -frequency DCT-coefficients (DCT) in the block to which the at least one block boundary belongs and in the block adjacent to said at least one block boundary.

3. Method according to claim 2, wherein filtering (10) is further dependent on size of the two blocks, quantization parameters used for encoding of the two blocks, motion data (MoD) assigned to the two blocks and/or the difference in luminance and/or colour of pixels of said at least one block boundary and of pixels of an adjacent block boundary of said adjacent block.

4. Method according to any of the claims 1-3, further comprising
- filtering the representation with an H.264/AVC deblocking filter (DeBF) and
- reconstructing a further representation of a further image frame by help of the H.264/AVC deblocked representation (OutIm) and of motion data (MoD).

5. Method according to any of the claims 1-3, further comprising reconstructing a further representation of a further image frame by help of the filtered representation (OutIm) and of motion data (MoD).

6. Decoder for decoding an image frame of an image frame sequence, the decoder comprising
- means (InvT, ADD) for reconstruction of a representation of an image frame,
- filtering means (DeBF, PostPF) connected to said means (InvT) for reconstruction,
- means for outputting connected to said filtering means (DeBF, PostPF), wherein
- the filtering means (DeBF, PostPF) comprise classifying means (PostPF) adapted for classifying a block boundary as being either high-freq or low-freq and
- the filterings means (DeBF, PostPF) are adapted for filtering pixels of the block boundary in dependency on its classification.

7. Decoder according to claim 6, wherein the classifying means (PostPF) are adapted for classifying the block boundary in dependency on the number and strength of high - frequency DCT-coefficients (DCT) in the block to which the block boundary belongs and in the block adjacent to said block boundary.

8. Decoder according to claim 6 or 7, wherein the classifying means (PostPF) are adapted for classifying the block boundary in dependency on the difference in quantization parameters of two blocks, the difference in motion vectors assigned to the two blocks and/or difference in luminance and/or colour of the two blocks wherein the two blocks are the block to which the block boundary belongs and in the block adjacent to said block boundary.

9. Decoder according to any of the claims 6-8, wherein
- the filtering means (DeBF, PostPF) comprise an H.264/AVC deblocking filter (DeBF) and
- the means (InvT, ADD) for reconstruction are adapted for reconstructing a further representation of a further image frame by help of the H.264/AVC deblocked representation and by help of motion data (MoD).

10. Decoder according to any of the claims 6-8, wherein
- the means (InvT, ADD) for reconstruction are adapted for reconstructing a further representation of a further image frame by help of the filtered representation and by help of motion data (MoD).
